# EUROPEAN PATENT APPLICATION

(11) **EP 3 871 843 A1**
(43) Date of publication of application: **01.09.2021**
(21) Application number: 20196464.0
(22) Date of filing: 16.09.2020
(51) Int. Cl.: B25J 15/00, B25J 15/02, B25J 19/02, A47J 31/00

(54) **ROBOT GRIPPER FOR MANUFACTURING COFFEE BEVERAGES**

(30) Priority: 28.02.2020 KR 20200025240
(71) Applicant: Folletto Inc., Daejeon 34326 (KR)
(72) Inventor: PARK, No Sub, 34090 Daejeon (KR)
(74) Representative: dompatent von Kreisler Selting Werner - Partnerschaft von Patent- und Rechtsanwälten mbB

(57) **Abstract**

Disclosed herein is a robot gripper for manufacturing coffee beverages. The robot gripper is coupled to an end of a handling robot arm (100). The robot gripper includes: a rotating bracket (200) rotatably coupled to an end of the robot arm (100); a first gripping unit (300) coupled to one side of the rotating bracket (200), and configured to grip a cup (700) or a cup lid (800); a second gripping unit (400) coupled to the opposite side of the rotating bracket (200), and configured to grip a milk pitcher (900); air chucks (500) coupled to both sides of the rotating bracket (200), respectively, and configured to drive the first and second gripping units (300, 400), respectively; and a pressure head (600) fastened to one side of the second gripping unit (400), and configured to couple a cup lid (800) to the top of a cup (700) by pressing the cup lid (800) placed on the top of the cup (700).

## Description

### CROSS-REFERENCE TO RELATED APPLICATION

This application claims the benefit of Korean Patent Application No. 10-2020-0025240 filed on February 28, 2020, which is hereby incorporated by reference herein in its entirety.

### BACKGROUND

### 1. Technical Field

The present invention relates generally to a robot gripper for manufacturing coffee beverages, and more particularly to a robot gripper for manufacturing coffee beverages, which is coupled to an end of a handling robot arm and can stably grip a cup, a cup lid and a milk pitcher and also couple a cup lid to a cup by pressing the cup lid placed on the top of the cup.

### 2. Description of the Related Art

Recently, as consumers' interest in coffee continues to increase, the number of coffee shops that sell coffee is also gradually increasing.

Coffee beverages manufactured using coffee beans are basically classified into instant coffee and brewed coffee. Furthermore, brewed coffee is classified into hand drip coffee and coffee made by an espresso machine according to their method of extracting coffee from coffee beans.

In particular, espresso is a basic raw material for several types of coffee sold in coffee shops. Coffee beverages, such as Americano, cafe latte, macchiato and cappuccino, using espresso are made only by baristas' manual work.

Accordingly, the tastes of coffee beverages are determined according to the proficiency of unskilled baristas and professional baristas, and affect sales of shops.

Meanwhile, one of the factors that are responsible for large proportions of coffee shop operating expenses is labor expenses. Although coffee vending machines are provided to reduce labor expenses, it is impossible to provide coffee with satisfactory taste through them.

An example of the technologies for solving the above problem is disclosed in Korean Patent No. 10-1963652.

Korean Patent No. 10-1963652 discloses an apparatus for preparing espresso and various coffee beverages using the espresso, the apparatus including: an espresso provision unit configured to include a cup support on which a cup containing espresso prepared by a first robot is seated; a coffee beverage provision unit configured to prepare various coffee beverages by using the espresso, which is prepared by a second robot in the espresso providing unit and supplied to the cup support in a state of being contained in the cup, and to discharge the various coffee beverages to a discharge unit; and a terminal installed on a base body; wherein the espresso provision unit includes: a cup feeding device disposed in the upper or lower portion of the base body; a coffee bean feeding and damping device configured to grind coffee beans, to place a predetermined amount of ground coffee beans in a porter filter, and to damp the porter filter with a damper; a coffee machine configured to combine the damped porter filter with a group head, and to extract espresso; a trash container configured to receive coffee grounds remaining in the porter filter when the porter filter is separated from the group head after the extraction of espresso; a washing machine configured to wash and dry the porter filter; and an orthogonal robot including an X-axis robot configured to traverse below the coffee bean feeding and damping device and the coffee machine, a Z-axis robot vertically coupled to the X-axis robot and configured to move up and down, and a turntable coupled to the Z-axis robot and configured to rotate, and configured to allow the porter filter to be placed on the turntable, to receive coffee beans from the coffee bean feeding and damping device, and to allow the porter filter to be combined with the group head of the coffee machine; and a cup support configured to support a cup containing espresso extracted by the coffee machine; and wherein the cup feeding device, the coffee machine, the trash container, and the washing machine are disposed to be located within the operating radius of the first robot.

In particular, scalar robots used as the first and second robots have a structure in which fingers capable of clamping an object while being rotatable are installed. In this case, the fingers have an object clamping function and a rotating tool, and thus the direction of the clamped object can be changed by the rotation of the fingers.

However, in the case of the above-described conventional technology, a cup containing a coffee beverage is provided to a customer in a state in which the cup is not covered with a cup lid. Accordingly, the conventional fingers perform only the function of simply gripping or releasing a cup, and thus the range of use of the technology is limited.

In recent years, technologies have been developed to cover the top of a cup containing a coffee beverage with a cup lid and provide the cup covered with the cup lid to a customer in order to prevent the taste and aroma of a coffee beverage from being deteriorated. Therefore, there is a need to develop an apparatus that is capable of gripping a cup lid and stably coupling the cup lid to the top of a cup.

### SUMMARY

The present invention has been conceived to overcome the above-described problems, and an object of the present invention is to provide a robot gripper for manufacturing coffee beverages, which is coupled to an end of a handling robot arm and can stably grip a cup, a cup lid and a milk pitcher and also couple a cup lid to a cup by pressing the cup lid placed on the top of the cup.

Another object of the present invention is to provide a robot gripper for manufacturing coffee beverages, in which the gripping unit of a robot gripper is formed as a dual-type gripper, and thus directions can be easily changed, thereby reducing the time required for the process of manufacturing a coffee beverage.

According to an aspect of the present invention, there is provided a robot gripper for manufacturing coffee beverages, the robot gripper being coupled to an end of a handling robot arm, the robot gripper including: a rotating bracket rotatably coupled to an end of the robot arm; a first gripping unit coupled to one side of the rotating bracket, and configured to grip a cup or a cup lid; a second gripping unit coupled to the opposite side of the rotating bracket, and configured to grip a milk pitcher; air chucks coupled to both sides of the rotating bracket, respectively, and configured to drive the first and second gripping units, respectively; and a pressure head fastened to one side of the second gripping unit, and configured to couple a cup lid to the top of a cup by pressing the cup lid placed on the top of the cup.

The rotating bracket may include: a fastening portion configured to come into surface contact with and be fastened to the end of the robot arm; coupling portions inclined and bent downward from both ends of the fastening portion, respectively, and each integrated with reinforcing pieces that are bent from edges of a corresponding one of the coupling portions and surround parts of a corresponding one of the air chucks.

The first gripping unit may formed in a semi-circular shape and include a pair of opposite fingers configured such that the interval therebetween is adjusted by a corresponding one of the air chucks.

The second gripping unit may be formed in a tong shape and include a pair of opposite fingers configured such that the interval therebetween is adjusted by a corresponding one of the air chucks.

The pressure head may be formed in a cap shape in one side of which is formed a circular opening.

The pressure head may couple a cup lid to a cup by pressing the front and rear sides or left and right sides of the cup lid in a state of accommodating the cup lid placed on the top of the cup therein.

A camera configured to photograph the state of a coffee beverage extracted by a coffee machine may be installed on one side of the rotating bracket.

The camera may check for the state of a picture drawn on the surface of the coffee beverage with milk froth by the second gripping unit that grips the milk pitcher.

### BRIEF DESCRIPTION OF THE DRAWINGS

The above and other objects, features, and advantages of the present invention will be more clearly understood from the following detailed description taken in conjunction with the accompanying drawings, in which:
FIG. 1 is a perspective view showing a handling robot equipped with a robot gripper for manufacturing coffee beverages according to the present invention;
FIG. 2 is a perspective view showing the robot gripper for manufacturing coffee beverages according to the present invention;
FIG. 3 is a view showing a state in which a cup is gripped by a first gripping unit according to the present invention;
FIG. 4 is a view showing a state in which a milk pitcher is gripped by a second gripping unit according to the present invention;
FIG. 5 is a view showing a state in which milk froth is fed to a cup containing a coffee beverage with a milk pitcher gripped by the second gripping unit according to the present invention;
FIG. 6 is a view showing a state in which the inside of a milk pitcher is washed with the milk pitcher gripped by the second gripping unit according to the present invention;
FIG. 7 is a view showing a state in which a cup lid is gripped by the first gripping unit according to the present invention;
FIG. 8 is a view showing a state in which a cup lid is pressed by a pressure head according to the present invention; and
FIG. 9 is a view showing a state in which a camera is mounted on the robot gripper for manufacturing coffee beverages according to the present invention.

### DETAILED DESCRIPTION

Embodiments of the present invention will be described in detail below with reference to the accompanying drawings so that those having ordinary knowledge in the art to which the present invention pertains can easily practice the present invention.

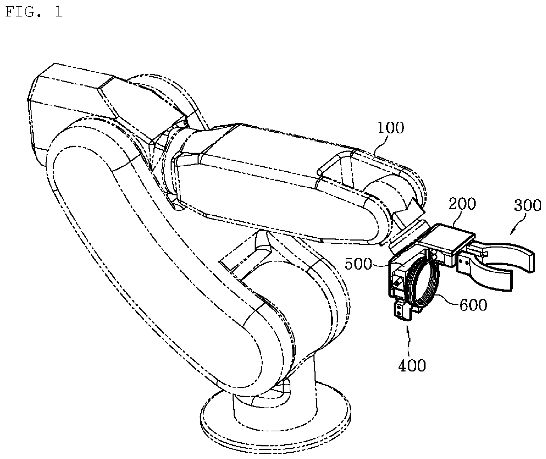

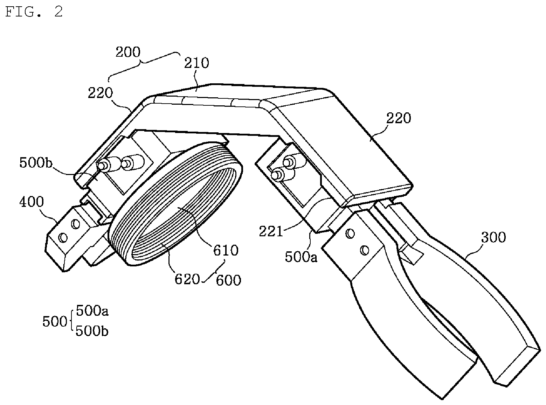

As shown in FIGS. 1 and 2, a robot gripper for manufacturing coffee beverages according to the present invention is coupled to an end of a handling robot arm 100, and includes a rotating bracket 200, a first gripping unit 300, a second gripping unit 400, air chucks 500, and a pressure head 600.

Prior to the following description of the components of the robot gripper for manufacturing coffee beverages according to the present invention, a related process will now be described. First, a handling robot that is applied to an apparatus and system for manufacturing coffee beverages grips an individual cup in a cup feeding device in which a plurality of cups is stacked, discharges the cup from the cup feeding device, moves to an automatic coffee machine, and puts a coffee beverage into the cup.

Thereafter, in a state in which the cup is placed on a cup support, the handling robot grips a cup lid in a cup lid feeding device in which a plurality of cup lids is stacked, discharges the cup lid from the cup lid feeding device, moves, and then covers the top of the cup with the cup lid.

The handling robot for manufacturing coffee beverages proposed by the present invention includes a single robot and performs a series of steps of gripping and discharging a cup, moving to an automatic coffee machine, putting a coffee beverage into the cup, and covering the top of the cup containing the coffee beverage with a cup lid alone, unlike the conventional technology that manufactures a coffee beverage using a plurality of robots and performs only the function of simply gripping or releasing a cup.

Accordingly, in order for the handling robot to perform the above-described steps alone, it is essential to apply a robot gripper for manufacturing coffee beverages according to the present invention.

The rotating bracket 200 is rotatably coupled to an end of the robot arm 100 and rotates in a circumferential direction with respect to the axial direction of the robot arm 100. It is obvious that the rotation bracket 200 may be rotatably coupled to the robot arm 100 in various manners.

As the rotational operation of the rotating bracket 200 can be performed as described above, the directions of the corresponding components (the first gripping unit, the second gripping unit, and the pressure head) may be rapidly changed according to the process of manufacturing a coffee beverage and then corresponding operations may be performed.

Meanwhile, the rotating bracket 200 includes a plate-shaped fastening portion 210 and coupling portions 220.

The fastening portion 210 comes into surface contact with an end of the robot arm 100 and is fastened by a fastening member such as a bolt or the like.

The coupling portions 220 are inclined and bent downward from both ends of the fastening portion 210, respectively. Air chucks 500 are coupled to the coupling portions 220, respectively.

Reinforcing pieces 221 are bent from edges of a corresponding one of the coupling portions 220 to surround parts of a corresponding one of the air chucks 500. The reinforcing pieces 221 distribute the load exerted by the air chuck 500 and enhance a structure to improve rigidity.

The rotating bracket 200 allows the first gripping unit 300 and the second gripping unit 400 to operate without interfering with each other through the structure of the fastening portion 210 and the coupling portions 220. Furthermore, the rotating bracket 200 facilitates the changing of the directions of the first gripping unit 300 and the second gripping unit 400 while minimizing the operating range of the handling robot.

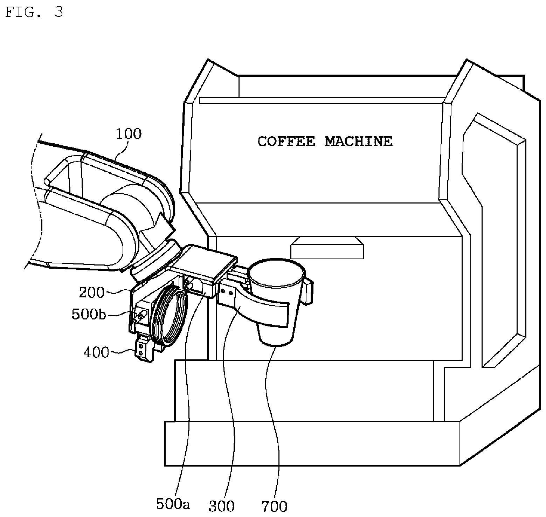

As shown in FIG. 3, the first gripping unit 300 is coupled to one side of the rotating bracket 200 and grips a cup 700.

The first gripping unit 300 is formed in a semi-circular shape and includes a pair of opposite fingers.

The interval between the fingers of the first gripping unit 300 is adjusted by the air chuck 500. In other words, the first gripping unit 300 is coupled to the air chuck 500a coupled to one side of the rotating bracket 200 so as to be operated by air pressure.

The first gripping unit 300 is configured to grip the outer surface of the cup 700 in such a manner that a pair of fingers that are operated by the air chuck 500 act as tongs. Accordingly, when a cup is discharged from the cup feeding device, when a coffee beverage is put into a cup in the coffee machine, and when a cup containing a coffee beverage is placed on the cup support, a state in which the cup 700 is gripped is maintained.

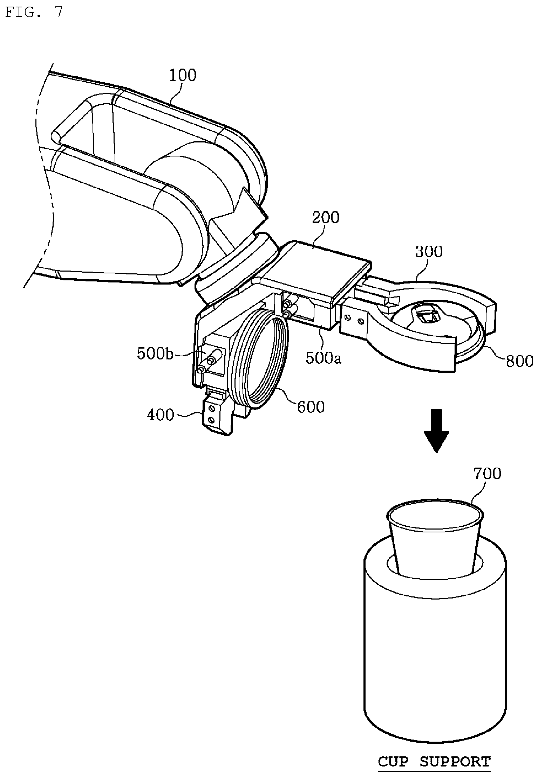

Furthermore, the first gripping unit 300 may also grip the outer surface of a cup lid 800, as shown in FIG. 7. When a cup lid is discharged from the cup lid feeding device, and when the cup lid 800 is seated on the top of the cup 700 containing a coffee beverage, a state in which the cup lid 800 is gripped is maintained.

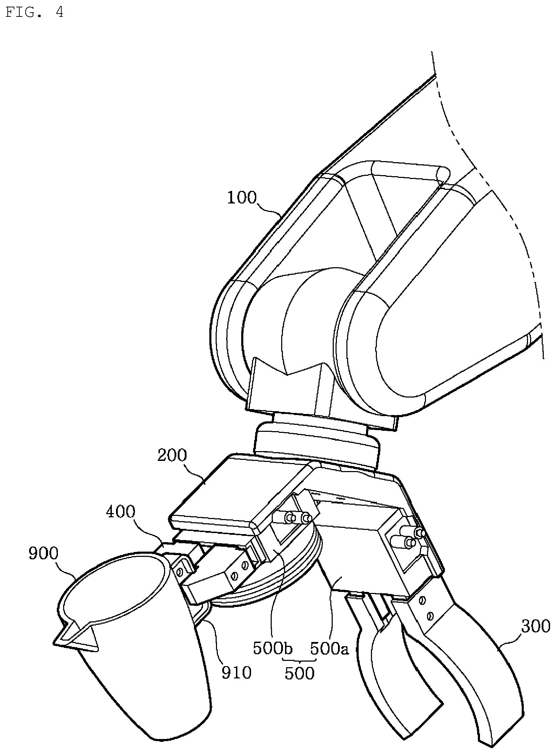

As shown in FIG. 4, the second gripping unit 400 is coupled to the other side of the rotating bracket 200 and grips a milk pitcher 900.

In this case, the grip portion 910 of the milk pitcher 900 does not have an open structure unlike an existing grip, and has a structure in which a concave grip groove is formed on a closed surface so that the milk pitcher 900 cannot be easily gripped by the second gripping unit 400.

The second gripping unit 400 is formed in a tong shape and includes a pair of opposite fingers.

The interval between the fingers of the second gripping unit 400 is adjusted by the air chuck 500. In other words, the second gripping unit 400 is coupled to the air chuck 500b coupled to the other side of the rotating bracket 200 so as to be operated by air pressure.

The second gripping unit 400 is configured to grip the grip portion 910 of the milk pitcher 900 in such a manner that a pair of fingers that are operated by the air chuck 500 act as tongs. Accordingly, when milk froth is put into the milk pitcher 900 to manufacture a latte beverage, when milk froth is fed to the cup 700 containing a coffee beverage, and when the inside of the milk pitcher 900 is washed, a state in which the milk pitcher 900 is gripped is stably maintained.

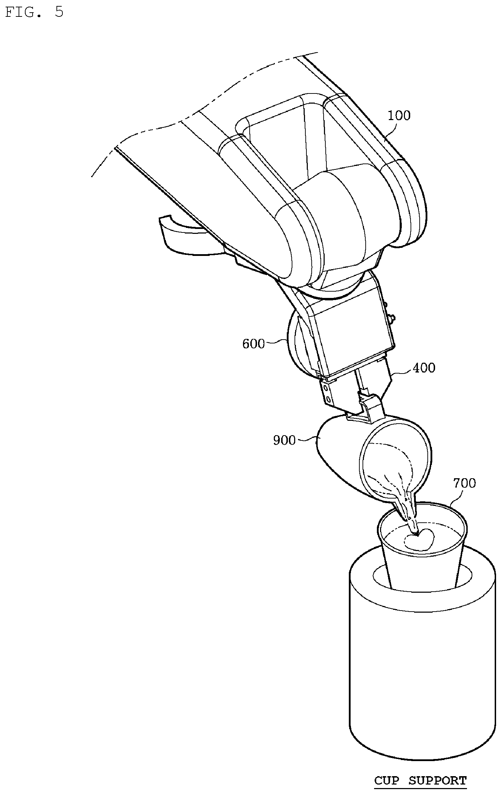

As shown in FIG. 5, in the case where milk froth is fed to the cup 700 containing a coffee drink, the milk froth contained in the milk pitcher 900 is poured into the inside of the cup 700 by the operation of the robot arm 100 in a state in which the milk pitcher 900 is gripped by the second gripping unit 400. In this case, a latte beverage is made by forming one of a heart shape and the like on the surface of the coffee beverage by various operations of the robot arm 100 that is driven by a drive program.

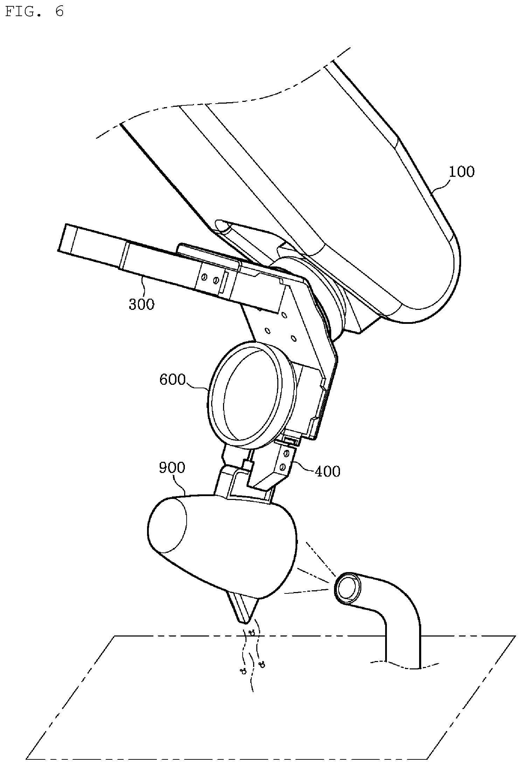

As shown in FIG. 6, in the case where the inside of the milk pitcher 900 is washed, the milk pitcher 900 is moved to a washing machine in a state in which the milk pitcher 900 is gripped by the second gripping unit 400, and is then washed. In this case, the milk froth remaining in the milk pitcher 900 is discarded to the washing machine by tilting the milk pitcher 900 at a predetermined angle by the operation of the robot arm 100 that is driven by the drive program, the inside of the milk pitcher 900 is washed with washing water supplied from the washing machine, and the milk pitcher 900 is lowered to its original position.

In particular, the washing of the milk pitcher 900 is performed to allow the inside of the milk pitcher 900 to be washed more cleanly while reciprocating the milk pitcher 900 toward and away from the washing nozzle of the washing machine through the operation of the robot arm 100 in a state in which the milk pitcher 900 is gripped by the second gripping unit 400. In this case, the washing nozzle of the washing machine has a radial nozzle structure so that washing water can be radially sprayed toward the inner circumferential surface of the milk pitcher 900 to cleanly clean the milk pitcher 900.

The air chucks 500 are coupled to both sides of the rotating bracket 200, respectively, and drive the first gripping unit 300 and the second gripping unit 400, respectively.

The air chucks 500 are operated in such a manner that chucks are closed or opened by the operation of supplying or releasing air pressure.

In particular, the first gripping unit 300 and the second gripping unit 400 are operated in conjunction with the operation of the air chucks 500.

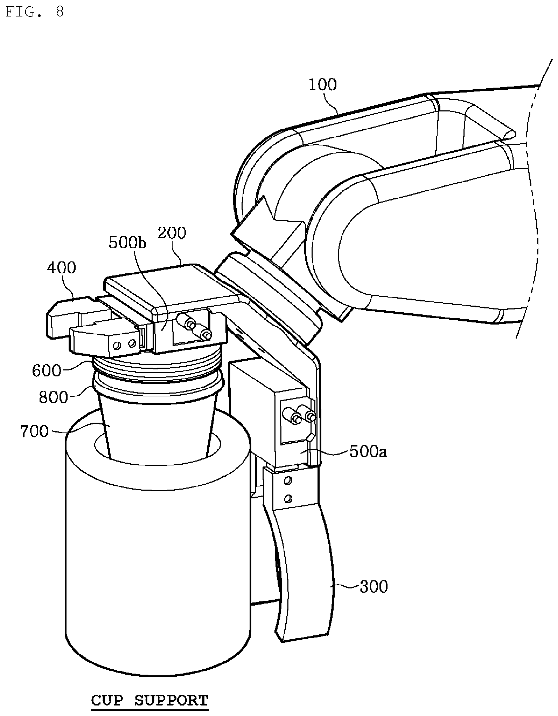

As shown in FIG. 8, the pressure head 600 is fastened to one side of the second gripping unit 400 and performs the function of coupling the cup lid 800 to the cup 700 by pressing the cup lid 800 placed on the top of the cup 700.

Preferably, the pressure head 600 is fastened to one surface of the air chuck 500b coupled to the other side of the rotating bracket 200.

The pressure head 600 is formed in a cap shape in one side of which is formed a circular opening 610.

In particular, the pressure head 600 is formed to have a larger inner diameter than the outer diameter of the cup lid 800. This is intended to facilitate the pressing and releasing of the cup lid 800.

A plurality of protrusions and depressions 620 is formed on the inner circumferential surface of the pressure head 600. This may facilitate the coupling of the cup lid 800 without slipping via the protrusions and depressions 620 when the cup lid 800 is coupled to the cup 700 by pressing the cup lid 800 placed on the top of the cup 700.

In addition, the pressing head 600 couples the cup lid 800 to the cup 700 while pressing the front and rear sides or left and right sides of the cup lid 700 in a state in which the cup lid 800 placed on the top of the cup 700 is accommodated in the pressing head 600. The front-rear or left-right motion of the pressing head 600 is performed by the operation of the robot arm 100 that is driven by a drive program in a state in which the cup lid 800 is accommodated in the pressing head 600. The front-rear or left-right motion of the pressure head 600 is repeated in a zigzag form until the cup lid 800 is completely coupled to the cup 700.

Generally, in the case of an unmanned apparatus and system for manufacturing coffee beverages, it is very important to ensure that the taste of a coffee beverage is not altered and is maintained desirably. Conventionally, most coffee beverage products are provided in a state in which a coffee beverage product is not covered with a cup lid, and thus a problem arises in that the aroma and taste of a coffee beverage are deteriorated.

To overcome this problem, in the present invention, the cup lid 800 is coupled to the cup 700 by pressing the cup lid 800 placed on the top of the cup 700 via the pressure head 600 fastened to a second gripping unit side.

Accordingly, the aroma and taste of a coffee beverage are prevented from being deteriorated by covering the top of the cup 700 with the cup lid 800 and then providing the cup 700 containing the coffee beverage.

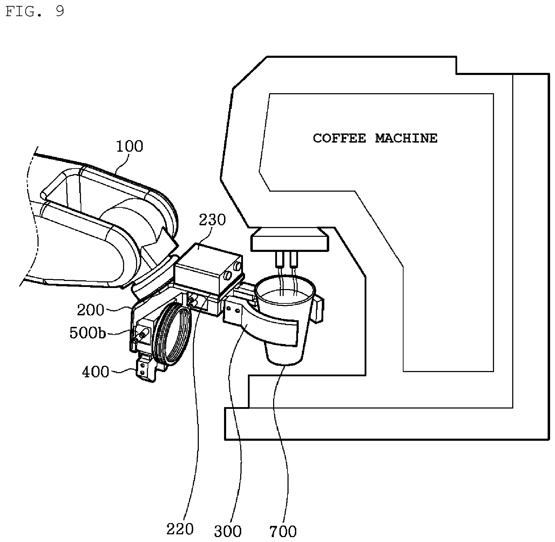

As shown in FIG. 9, a camera 230 configured to check for the extracted state of a coffee beverage or ice extracted by the coffee machine or to check for the state of a picture drawn on the surface of a coffee beverage by the second gripping unit 400 holding the milk pitcher 900 may be installed on one side of the rotating bracket 200. Preferably, the camera 230 is disposed on the outer surface of one coupling portion 220 of the rotating bracket 200.

The camera 230 photographs the extracted state of the coffee beverage or ice extracted by the coffee machine in a state in which the cup 700 is held by the first gripping unit 300, and transmits the photographed image to a control unit when the coffee beverage or ice is not normally extracted. The control unit analyzes the photographed image and transmits it to an administrator terminal.

In other words, the camera 230 photographs whether or not a coffee beverage or ice is normally extracted by the coffee machine and transmits it to the control unit. The control unit analyzes the image transmitted from the camera 230, controls the operation of the coffee machine to retry the extraction of a coffee beverage or ice when it is determined that a coffee beverage or ice is not normally extracted by the coffee machine, and determines that the raw materials of the coffee beverage or ice are exhausted in the coffee machine or the coffee machine is broken and also transmits it to an administrator terminal when the coffee beverage or ice is not extracted even after the retrial.

In this case, the control unit determines that a coffee beverage is not extracted by comparing an image input from the camera 230 with previously input image information, controls the operation of the coffee machine so that the coffee machine can extract a coffee beverage or ice again, and, when a coffee beverage or ice is not extracted despite the retrial of the coffee machine, determines that the raw materials of the coffee beverage or ice are exhausted in the coffee machine or the coffee machine is broken and transmits the information to an administrator terminal, thereby allowing an administrator to inspect the coffee machine.

Furthermore, when a picture is drawn on the surface of a coffee beverage with milk froth contained in the milk pitcher 900 held by the second gripping unit 400, the camera 230 may photograph the state of the picture and transmit it to the control unit.

In this case, the control unit checks whether or not a picture is being drawn normally by comparing and analyzing the picture transmitted from the control unit to the robot gripper and the picture drawn on the surface of a coffee beverage with the milk froth contained in the milk pitcher 900 held by the second gripping unit 400, and, when the picture is not drawn normally, transmits the information to an administrator terminal, thereby allowing an administrator to inspect the robot gripper.

Accordingly, the administrator can check for the states of the coffee machine and the robot through the image photographed by the camera 230.

As described above, the robot gripper for manufacturing coffee beverages according to the present invention is coupled to an end of a handling robot arm in an unmanned apparatus or system for manufacturing coffee beverages, and can stably grip a cup, a cup lid and a milk pitcher and also couple a cup lid to a cup by pressing the cup lid placed on the top of the cup, thereby providing the effect of enabling a series of steps of manufacturing a coffee beverage, performed by a handling robot, to be automatically performed.

In the robot gripper for manufacturing coffee beverages according to the present invention, the gripping unit of the robot gripper is formed as a dual-type gripper, and thus directions can be easily changed, thereby providing the effect of reducing the time required for the process of manufacturing a coffee beverage.

Although the present invention has been described based on some embodiments with reference to the accompanying drawings, it will be apparent to those skilled in the art that many various modifications and alterations may be made without departing from the scope of the present invention from this description. Therefore, the scope of the invention should be construed based on the claims set forth to encompass examples of such many various modifications and alterations.

## Claims

1. A robot gripper for manufacturing coffee beverages, the robot gripper being coupled to an end of a handling robot arm, the robot gripper comprising:
a rotating bracket rotatably coupled to an end of the robot arm;
a first gripping unit coupled to one side of the rotating bracket, and configured to grip a cup or a cup lid;
a second gripping unit coupled to an opposite side of the rotating bracket, and configured to grip a milk pitcher;
air chucks coupled to both sides of the rotating bracket, respectively, and configured to drive the first and second gripping units, respectively; and
a pressure head fastened to one side of the second gripping unit, and configured to couple a cup lid to a top of a cup by pressing the cup lid placed on the top of the cup.

2. The robot gripper of claim 1, wherein the rotating bracket comprises:
a fastening portion configured to come into surface contact with and be fastened to the end of the robot arm;
coupling portions inclined and bent downward from both ends of the fastening portion, respectively, and each integrated with reinforcing pieces that are bent from edges of a corresponding one of the coupling portions and surround parts of a corresponding one of the air chucks.

3. The robot gripper of claim 1, wherein the first gripping unit is formed in a semi-circular shape and comprises a pair of opposite fingers configured such that an interval therebetween is adjusted by a corresponding one of the air chucks.

4. The robot gripper of claim 1, wherein the second gripping unit is formed in a tong shape and comprises a pair of opposite fingers configured such that an interval therebetween is adjusted by a corresponding one of the air chucks.

5. The robot gripper of claim 1, wherein the pressure head is formed in a cap shape in one side of which is formed a circular opening.

6. The robot gripper of claim 1 or 5, wherein the pressure head couples a cup lid to a cup by pressing front and rear sides or left and right sides of the cup lid in a state of accommodating the cup lid placed on a top of the cup therein.

7. The robot gripper of claim 1, wherein a camera configured to photograph a state of a coffee beverage extracted by a coffee machine is installed on one side of the rotating bracket.

8. The robot gripper of claim 7, wherein the camera checks for a state of a picture drawn on a surface of the coffee beverage with milk froth by the second gripping unit that grips the milk pitcher.
